# EUROPEAN PATENT APPLICATION

(11) **EP 4 787 672 A1**
(43) Date of publication of application: **05.08.2026**
(21) Application number: 24876179.3
(22) Date of filing: 25.07.2024
(51) Int. Cl.: H02K 1/22, H02K 1/276

(54) **ROTOR STRUCTURE, MOTOR, AND COMPRESSOR**

(30) Priority: 08.10.2023 CN 202311292915
(71) Applicant: Anhui Meizhi Compressor Co., Ltd., Hefei, Anhui Province 230031 (CN)
(72) Inventor: AI, Chengliu, Hefei, Anhui 230031 (CN); NI, Fanglei, Hefei, Anhui 230031 (CN); HUANG, Gang, Hefei, Anhui 230031 (CN); ZHANG, Wei, Hefei, Anhui 230031 (CN)
(74) Representative: Ran, Handong
(86) International application number: PCT/CN2024/107634
(87) International publication number: WO 2025/077359

(57) **Abstract**

A rotor structure (202), a motor (200), and a compressor. The rotor structure (202) comprises: multiple rotor laminations (204), the multiple rotor laminations (204) being stacked. Each rotor lamination (204) is provided with a shaft hole (214) and first mounting slots (2062) and second mounting slots (2064) uniformly disposed around the axis of the shaft hole (214). The shape of the first mounting slots (2062) is different from the shape of the second mounting slots (2064), and the circumferential positions of the first mounting slots (2062) are different from the circumferential positions of the second mounting slot (2064). A first magnet (2082) is disposed in each first mounting slot (2062), and a second magnet (2084) is disposed in each second mounting slot (2064). The diameter of the shaft hole (214) is a fourth radial dimension, the shortest distance between each first mounting slot (2062) and the axis is a fourth dimension, and the range of the ratio between the fourth dimension and the fourth radial dimension is greater than 1 and less than 1.2.

## Description

### CROSS-REFERENCE TO RELATED APPLICATIONS

This application claims priority to Chinese Patent Application No. 202311292915.X filed with the China National Intellectual Property Administration on October 08, 2023 and entitled "ROTOR STRUCTURE, MOTOR, AND COMPRESSOR", the entire contents of which are incorporated herein by reference.

### FIELD

The present application relates to the field of motor technology, and in particular, to a rotor structure, a motor, and a compressor.

### BACKGROUND

At present, in order to meet different load requirements, the structure of a rotor of a ferrite permanent magnet motor requires an adequate structural strength. The rotor is required to support a permanent magnet of the rotor, ensuring the integrated physical strength of a rotor core at the same time. In the prior art, a rotor support beam with a narrow dimension is usually disposed between the permanent magnets on the inner side of the rotor, and holes are opened between the poles of the permanent magnets to reduce magnetic flux leakage, with the support beam located between the holes. Although the rotor support beam ensures the integrated forming and physical strength of the rotor core laminations, it further provides a magnetic flux leakage path between adjacent poles of the permanent magnets, resulting in attenuation of an air-gap magnetic field amplitude and an increase in motor copper loss. In addition, due to the relatively large direct-axis inductance of the motor structure, there is a high demagnetization risk.

### SUMMARY

The present application aims to solve at least one of the problems in the prior art or related art.

In view of this, an embodiment of a first aspect of the present application provides a rotor structure.

An embodiment of a second aspect of the present application provides a motor.

An embodiment of a third aspect of the present application provides a compressor.

To achieve the above purpose, an embodiment of the first aspect of the present application provides a rotor structure, comprising: a plurality of rotor laminations, stacked one over another; each rotor laminations is provided with a shaft hole and first mounting slots and second mounting slots uniformly arranged around the axis of the shaft hole; the shape of the first mounting slots is different from the shape of the second mounting slots, and the circumferential positions of the first mounting slots are different from the circumferential positions of the second mounting slot. A first magnet is disposed in each first mounting slot; and a second magnet is disposed in each second mounting slot; wherein, the diameter of the shaft hole is a fourth radial dimension, the shortest distance between each first mounting slot and the axis is a fourth dimension, and the range of the ratio of the fourth dimension to the fourth radial dimension is greater than 1 and less than 1.2.

In some embodiments, the ratio of the fourth dimension to the fourth radial dimension ranges from 1.01 to 1.2.

In some embodiments, the cross-sectional shape of the second magnet is a rectangle and a trapezoid connected radially. The longer side of the rectangle is connected to the lower base of the trapezoid, and the dimension of the longer side of the rectangle is twice the dimension of the upper base of the trapezoid.

In some embodiments, the included angle between the leg of the trapezoid and the upper base of the trapezoid ranges from 0° to 90°.

In some embodiments, the ratio of the dimension of a shorter side of the rectangle to the dimension of the upper base of the trapezoid ranges from 0.8 to 0.95.

In some embodiments, the ratio of the dimension of the longer side of the rectangle to the dimension of the opening in an end of the second mounting slot away from the axis ranges from 1.3 to 1.35.

In some embodiments, the rotor structure further comprises: mounting holes disposed in the rotor laminations; and end plates disposed at two axial ends of the plurality of rotor laminations, each end plate being connected to the rotor laminations through the mounting holes.

An embodiment of the second aspect of the present application provides a motor, comprising: the rotor structure according to the embodiments of the first aspect; and a stator structure disposed coaxially with the rotor structure. Therefore, the motor provided by the present application has all the beneficial effects of the rotor structure provided in any of the above embodiments.

In some embodiments, the radial dimension of the air gap between the rotor structure and the stator structure is a first air gap dimension, the diameter of a third virtual circle corresponding to the outer edge of the rotor laminations is a third radial dimension, and the difference between a second radial dimension and the third radial dimension is twice the first air gap dimension.

In some embodiments, the rotor structure further comprises: arc-shaped cut edge provided on the outer edge of the rotor laminations. The center of the arc-shaped cut edge does not coincide with the axis, and the ratio of the radius of the arc-shaped cut edge to the third radial dimension ranges from 0.15 to 0.35.

In some embodiments, the ratio of the width of the first mounting slot to the difference between the third radial dimension and twice the fourth dimension ranges from 0.15 to 0.3.

An embodiment of the third aspect of the present application provides a compressor, comprising: any rotor structure according to the first aspect or any motor according to the second aspect.

The additional aspects and advantages of the present application will become apparent in the following description or may be learned through practice of the present application.

### BRIEF DESCRIPTION OF THE DRAWINGS

FIG. 1 shows a schematic view of the structure of a stator structure according to an embodiment of the present application;
FIG.2 shows a schematic view of the structure of a motor according to an embodiment of the present application;
FIG.3 shows a schematic view of the structure of a motor according to an embodiment of the present application;
FIG.4 shows a schematic view of a cross-sectional structure of a rotor structure according to an embodiment of the present application;
FIG.5 shows a schematic view of the structure of a motor according to an embodiment of the present application;
FIG.6 shows a schematic view of the structure of a motor according to an embodiment of the present application;
FIG.7 shows a schematic view of the structure of a motor according to an embodiment of the present application;
FIG.8 shows an enlarged schematic view of the structure of Part A in FIG. 7;
FIG.9 shows a schematic view of efficiency improvement effect according to an embodiment of the present application; and
FIG.10 shows the demagnetization of permanent magnets according to an embodiment of the present application;

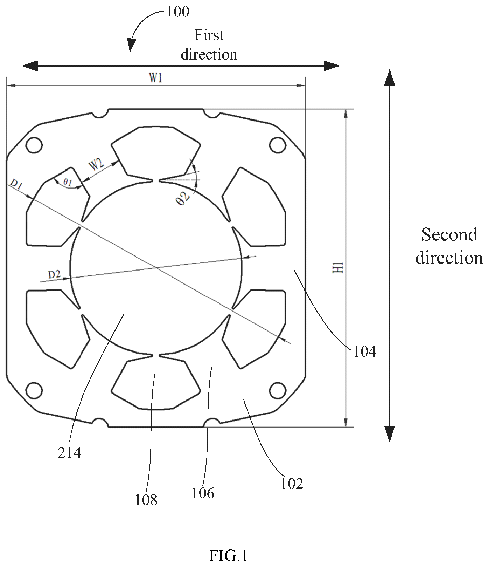

Wherein, the corresponding relationships between the reference signs and the component names in FIGS. 1 to 8 are as follows:
100: stator structure; 102: stator lamination; 104: stator yoke; 106: stator tooth; 1062: tooth body structure; 1064: tooth shoe structure; 108: winding slot; 110: winding;
200: motor; 202: rotor structure; 204: rotor lamination; 2062: first mounting slot; 2064: second mounting slot; 2082: first magnet; 2084: second magnet; 210: mounting hole; 212: end plate; 214: shaft hole; 216: arc-shaped cut edge.

### DETAILED DESCRIPTION OF THE APPLICATION

To more clearly understand the above purposes, features and advantages of the embodiments of the present application, the embodiments of the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the embodiments of the present application can further be implemented using other embodiments other than these described herein. Therefore, the protection scope of the present application is not limited by the embodiments disclosed in the following text.

Some embodiments of the present application will be detailed hereinafter by referring to FIGS. 1 to 10.

An embodiment of the present application provides a rotor structure, and the rotor structure comprises a plurality of rotor laminations 204. Each rotor lamination is provided with a shaft hole 214 and first mounting slots 2062 and second mounting slots 2064 uniformly arranged around the shaft hole 214. These special designs are intended to mount magnets positioned at different positions, for example, a first magnet 2082 and a second magnet 2084, to create a magnetic field required by a motor 200.The first magnet 2082 and the second magnet 2084 are disposed in the first mounting slot 2062 and the second mounting slot 2064, respectively, and they are permanent magnets of the motor 200, which generate a magnetic field to interact with the magnetic field of a stator, to drive the rotation of the motor 200. The mounting manner and positions of the first magnet 2082 and the second magnet 2084 may affect the output power, efficiency and performance of the motor 200. In addition, the shaft hole is a hole for axis connection of the rotor and the motor 200, and the two types of mounting slots are configured to mount the magnets. The design of these holes and slots may affect the structural strength, magnetic field distribution and magnetic flux density of the rotor. The present solution mainly defines a fourth dimension. In some embodiments, the ratio of the shortest distance between the first mounting slot 2062 and the axis to the diameter of the shaft hole is between 1 and 1.2, exclusive of the endpoints. These dimension parameters may be key design parameters of the stator and rotor structure 202, which are related to the diameter of the shaft hole, the positions of the mounting slots, magnetic field distribution and so on. Their reasonable configuration may help achieve desired magnetic field characteristics and mechanical strength.

Wherein, a stator structure 100 is a stationary part of the motor 200 and comprises a plurality of stator laminations 102. These laminations are designed with characteristics, for example, the shape and dimensions of stator teeth. Such characteristics may affect the magnetic field distribution and magnetic flux density of the stator, as well as the efficiency and performance of the motor 200.

The rotor structure 202 is a rotating part of the motor 200 and is disposed coaxially with the stator structure 100.

On the basis of any embodiment, the rotor structure 202 comprises a plurality of rotor laminations 204, each lamination is provided with a shaft hole and the first mounting slots 2062 and the second mounting slots 2064 uniformly arranged around the shaft hole. These special designs are intended to mount magnets at different positions, for example, the first magnet 2082 and the second magnet 2084, to create the magnetic field required by the motor 200.The first magnet 2082 and the second magnet 2084 are disposed in the first mounting slot 2062 and the second mounting slot 2064, respectively, and they are permanent magnets of the motor 200, which generate a magnetic field to interact with the magnetic field of the stator, to drive the rotation of the motor 200.The mounting manner and positions of the first magnet 2082 and the second magnet 2084 may affect the output power, efficiency and performance of the motor 200.In addition, the shaft hole is a hole for axis connection of the rotor and the motor 200, and the two types of mounting slots are configured to mount the magnets. The design of these holes and slots may affect the structural strength, magnetic field distribution and magnetic flux density of the rotor. The present solution mainly defines the fourth dimension. In some embodiments, the ratio of the shortest distance between the first mounting slot 2062 and the axis to the diameter of the shaft hole is between 1 and 1.2, exclusive of the endpoints. These dimension parameters may be key design parameters of the stator and rotor structure 202, which are related to the diameter of the shaft hole, the positions of the mounting slots, magnetic field distribution and so on. Their reasonable configuration may help achieve the desired magnetic field characteristics and mechanical strength.

In summary, the above parameter settings directly affect the performance, efficiency and stability of the motor 200.

On the basis of any embodiment, the ratio of the fourth dimension to a fourth radial dimension is limited to be between 1.01 and 1.2, which specifies the relationship between the diameter of the shaft hole in the rotor lamination 204 and the mounting slots disposed around the shaft hole is designated, and thus the efficiency of the motor 200 can be improved, to meet the requirement of high-efficiency operation within a variable frequency full speed range.

On the basis of any embodiment, the shape of the cross section of the second magnet 2084 is composed of a rectangle and a trapezoid connected radially. The longer side of the rectangle is connected to the lower base of the trapezoid. By limiting the dimension of the longer side of the rectangle to be twice the dimension of the upper base of the trapezoid, the second magnet 2084 and the first magnet 2082 can be disposed on the rotor lamination 204 as fully as possible, to improve the performance of the motor.

On the basis of any embodiment, by limiting the included angle between the oblique side of the trapezoid and the upper base of the trapezoid to be in a range of 0° to 90°, the magnetic field distribution and magnetic performance are adjusted, and the magnetization direction of the permanent magnet is simultaneously affected.

On the basis of any embodiment, the ratio of the dimension of the shorter side of the rectangle to the dimension of the upper base of the trapezoid ranges from 0.8 to 0.95, to adjust the magnetic field distribution and affect the magnetic properties and magnetic field strength, to meet the requirement of high-efficiency operation within a variable frequency full speed range.

On the basis of any embodiment, the ratio of the dimension of the longer side of the rectangle to the dimension of the opening in an end of the second mounting slot 2064 away from the axis is limited to a range between 1.3 and 1.35. This affects the mounting position of the permanent magnet on the rotor lamination 204, and further affects the efficiency and performance of the motor 200, to meet the requirement of high-efficiency operation within a variable frequency full speed range.

On the basis of any embodiment, mounting holes 210 are provided in the rotor laminations 204, and end plates 212 are disposed at two axial ends of the plurality of rotor laminations 204. Each end plate is connected to the rotor laminations 204 through the mounting holes. These components may be configured to fix and connect the magnets and the rotor laminations 204, which ensures their stability during high-speed operation.

As shown in FIG. 1, the stator structure 100 provided in this embodiment is mainly formed by stacking a plurality of stator laminations 102. The stator structure 100 is disposed by stacking a plurality of stator laminations 102.The stator laminations 102 are stacked along a perpendicular axis to form the entire stator portion. Each stator lamination 102 comprises a stator yoke 104 and a plurality of stator teeth 106. The stator teeth 106 are distributed on the stator yoke 104 and they are evenly disposed around the axis of the stator structure. A winding slot 108 is formed between any two adjacent stator teeth 106, and these slots are configured to accommodate the coil of a winding 110. One end of the plurality of stator teeth 106 away from the stator yoke 104 forms a first virtual circle with a diameter equal to a first radial dimension. Similarly, one end of the winding slots 108 away from the stator yoke 104 forms a second virtual circle with a diameter equal to a second radial dimension. It should be emphasized that by defining the two radial dimensions and the second radial dimension (the diameter of the second virtual circle) is greater than half of the first radial dimension (the diameter of the first virtual circle), it helps achieve optimized magnetic field distribution and motor performance, enables high-efficiency operation of the system of the motor 200 within a full speed range, and provides the motor 200 with strong resistance to irreversible demagnetization.

It can be understood that the second virtual circle is the inner circle of the stator structure 100 and configured to receive the rotor structure 202, and the first virtual circle is the circle formed by the portion of the stator yoke 104.

To sum up, the stator structure 100 optimizes the magnetic field distribution of the motor 200and improves motor performance by stacking the stator laminations 102, designing the distribution of the stator teeth 106 and the winding slots 108, and considering the radial dimension relationship of the virtual circles. This structure is advantageous in enhancing the efficiency, stability and output performance of the motor 200.

On the basis of any embodiment, the ratio of the second radial dimension to the first radial dimension ranges from 0.55 to 0.65. Limiting this ratio range aims to achieve magnetic field distribution and motor performance. A larger second radial dimension may exert a certain influence on the air gap magnetic field, which in some cases may help improve the efficiency, output power and stability of the motor 200.

On the basis of any embodiment, the dimensions of the stator lamination 102 in two directions are a first dimension and a second dimension, respectively. In the case that the stator lamination 102 is approximately rectangular, the first dimension and the second dimension are equivalent to the length and the width. In some embodiments, the dimension of the stator lamination 102 along a first direction is the first dimension. The dimension of the stator lamination 102 along a second direction perpendicular to the first direction is the second dimension. The ratio of the first radial dimension to the sum of the first dimension and the second dimension ranges from 0.425 to 0.475.The above limitations can improve performance parameters of the motor 200 such as efficiency and output power.

On the basis of any embodiment, the stator teeth 106 are arc-shaped at an end away from the stator yoke 104, which helps optimize magnetic field distribution and reduce magnetic flux leakage, to improve the efficiency and performance of the motor 200. The arc shape affects the magnetic properties and mechanical structure of the stator teeth 106, which in turn affects the operation of the motor 200.

On the basis of any embodiment, the structure of the stator tooth 106 is divided into two parts: a tooth body and a tooth shoe. In some embodiments, a tooth body structure is connected to the stator yoke 104, and a tooth shoe structure 1064 is disposed at the other end of the tooth body structure 1062. By limiting the width of the tooth body structure 1062 to be 0.2 to 0.3 time the first radial dimension, the motor performance can be conveniently improved.

On the basis of any embodiment, the stator tooth 106 is symmetrically defined, which is symmetrical with respect to the angular bisector of a central angle formed by the two circumferential ends of the tooth shoe structure 1064 relative to the center of the stator lamination 102, and thus the magnetic field distribution of the motor 200 can be stabilized and the stability during operation can be improved.

On the basis of any embodiment, by defining the width of the tooth body structure 1062, the width of the tooth body structure 1062 affects the magnetic field distribution and magnetic flux density of the motor 200. Limiting the width to be 0.25 time the first radial dimension helps achieve the desired magnetic field strength, to ensure the high-efficiency operation of the motor 200 under different loads and speeds.

On the basis of any embodiment, by defining the included angle of the side walls, it is limited to be 85°~105° which is close to a perpendicular relationship, the stability of the stator teeth is better and the desired magnetic field distribution can be obtained, to improve motor performance.

On the basis of any embodiment, the included angle between the side wall of the tooth shoe structure connected to the tooth body structure and the direction perpendicular to the symmetry axis of the winding slot 108 is limited to be 10°~20°, which can ensure the stability of the tooth shoe during the operation of the motor 200, to help maintain the structural integrity of the motor 200.

Another embodiment of the present application provides a motor 200, comprising: the rotor structure 202 according to the embodiment of the above first aspect; and a stator structure 100 disposed coaxially with the rotor structure 202. Therefore, it has all the beneficial effects of the stator structure 100 according to any one described above.

In the embodiment, the rotor structure may be any structure.

On the basis of any embodiment, the first air gap dimension is the radial dimension of the air gap between the rotor structure 202 and the stator structure 100. The diameter of a third virtual circle corresponds to the outer edge of the rotor lamination 204. By limiting the difference between the second radial dimension and the third radial dimension to be twice the first air gap dimension, the magnetic field distribution between the stator and rotor and the air gap dimension can be affected, to affect the efficiency and performance of the motor 200, to meet the requirement of high-efficiency operation within a variable frequency full speed range.

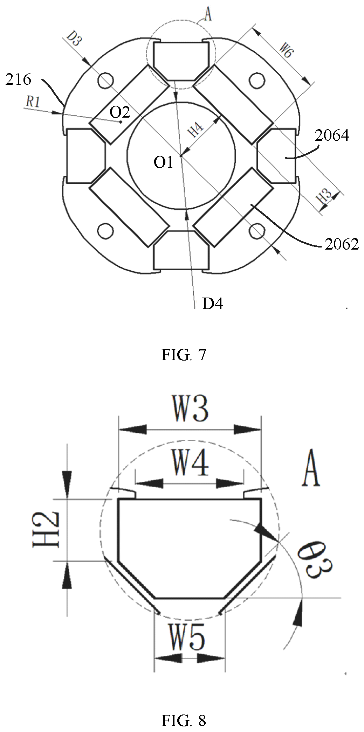

On the basis of any embodiment, as shown in FIG. 7, the arc-shaped cut edge 216 is provided on the outer edge of the rotor lamination 204, and the center of the arc-shaped cut edge 216 does not coincide with the axis. The ratio of the radius of the arc-shaped cut edge 216 to the third radial dimension ranges from 0.15 to 0.35. This design helps reduce the attenuation of air gap magnetic field strength and improve magnetic field stability.

On the basis of any embodiment, the ratio of the width of the first mounting slot 2062 to the difference between the third radial dimension and twice the fourth dimension is limited to a range of 0.15 to 0.3. The ratio range is the ratio of the difference between the width of the first mounting slot 2062 and twice the fourth dimension. It is intended to provide appropriate space for mounting magnets on the rotor lamination 204, to affect magnetic field distribution and motor performance.

Another embodiment of the present application provides a compressor, which comprises the rotor structure 202 or the motor 200, and therefore has all the beneficial effects of the above motor 200 or any rotor structure 202described above, which are not repeated herein.

In one embodiment, the motor in the compressor only comprises the stator structure 100 described above, and the stator structure 100 is mainly formed by stacking a plurality of stator laminations 102. The stator structure 100 is disposed by stacking a plurality of stator laminations 102.The stator laminations 102 are stacked along a perpendicular axis to form the entire stator portion. Each stator lamination 102 comprises a stator yoke and a plurality of stator teeth. The stator teeth are distributed on the stator yoke and they are evenly disposed around the axis of the stator structure. A winding slot 108 is formed between any two adjacent stator teeth, and these slots are configured to accommodate a winding 110. One end of the plurality of stator teeth away from the stator yoke forms a first virtual circle with a diameter equal to a first radial dimension. Similarly, one end of the winding slots 108 away from the stator yoke forms a second virtual circle with a diameter equal to a second radial dimension. It should be emphasized that by defining the two radial dimensions and the second radial dimension (the diameter of the second virtual circle) is greater than half of the first radial dimension (the diameter of the first virtual circle), it helps achieve optimized magnetic field distribution and motor performance, enables high-efficiency operation of the system of the motor within a full speed range, and provides the motor 200 with strong resistance to irreversible demagnetization.

In another embodiment, the motor in the compressor comprises both the above stator structure and the rotor structure described above, and the rotor structure comprises a plurality of rotor laminations 204. Each rotor lamination 204 is provided with a shaft hole and first mounting slots 2062 and second mounting slots 2064 uniformly arranged around the shaft hole. These special designs are intended to mount magnets positioned at different positions, for example, a first magnet 2082 and a second magnet 2084, to create a magnetic field required by a motor 200. The first magnet 2082 and the second magnet 2084 are disposed in the first mounting slot 2062 and the second mounting slot 2064, respectively, and they are permanent magnets of the motor 200, which generate a magnetic field to interact with the magnetic field of a stator, to drive the rotation of the motor 200. The mounting manner and positions of the first magnet 2082 and the second magnet 2084 may affect the output power, efficiency and performance of the motor 200. In addition, the shaft hole is a hole for axis connection of the rotor and the motor 200, and the two types of mounting slots are configured to mount the magnets. The design of these holes and slots may affect the structural strength, magnetic field distribution and magnetic flux density of the rotor. The present solution mainly defines a fourth dimension. In some embodiments, the ratio of the shortest distance between the first mounting slot 2062 and the axis to the diameter of the shaft hole is between 1 and 1.2, exclusive of the endpoints. These dimension parameters may be key design parameters of the stator and rotor structure 202, which are related to the diameter of the shaft hole, the positions of the mounting slots, magnetic field distribution and so on. Their reasonable configuration may help achieve desired magnetic field characteristics and mechanical strength.

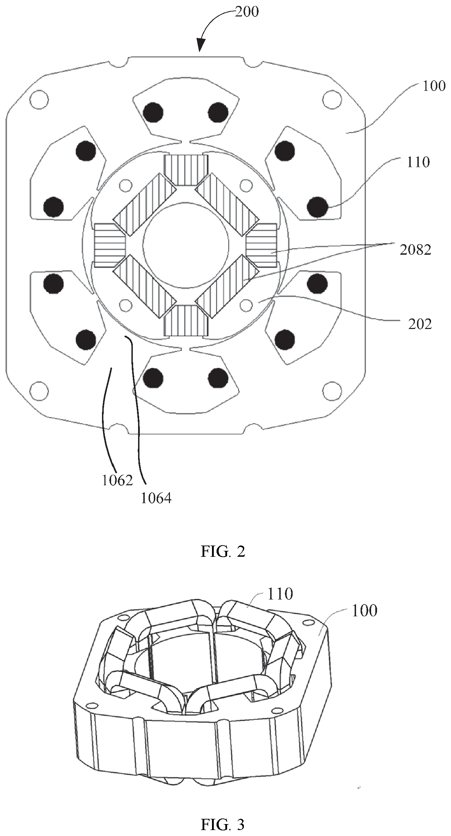

In an embodiment, the motor 200, as shown in FIG. 2, consists of a stator structure, windings 110, permanent magnets and a rotor core. Wherein, the lamination dimension of the stator structure is shown in FIG. 1, wherein, 0.425×(W1+H1) < D1 < 0.475×(W1+H1),0.55×D1 ≤ D2 ≤ 0.65×D1,W2 = 0.25×D1,85° ≤ θ1 ≤ 100°,10° ≤ θ2 ≤ 20°.

The motor mainly consists of a stator, windings, a rotor and permanent magnets, wherein, the windings are formed by winding around each stator tooth. The permanent magnets of the rotor are composed of one set of regular rectangular permanent magnets and another set of quasi-rectangular permanent magnets. By designing the shape of the slot of the stator, windings, the shape of the permanent magnet, and a stator-rotor air gap, high-efficiency operation of the system of the motor (comprising a controller) within a variable frequency full speed range can be achieved, and the permanent magnets of the motor feature strong resistance to irreversible demagnetization.

Wherein, D1 is the first radial dimension, W1 is the first dimension, H1 is the second dimension, D2 is the second radial dimension, W2 is the width of the stator tooth, θ1 is the angle between the tooth body of the stator tooth and the winding slot, and θ2 is the angle between the radial outer wall surface of the tooth shoe of the stator tooth and the tangent plane of the end portion of the tooth shoe.

The three-dimensional diagram of the stator structure and windings 110 is shown in FIG. 3. The windings 110 are formed by winding copper wire around each stator tooth.

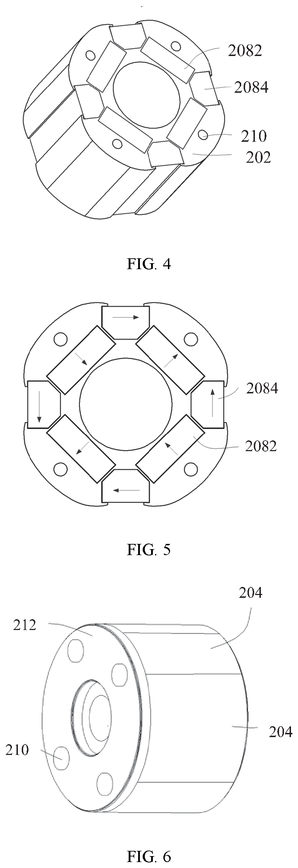

The three-dimensional diagram of the rotor is shown in FIG. 4. Two sets of permanent magnets, namely the first magnet 2082 and the second magnet 2084, are mounted in the rotor lamination 204. The magnetization directions of the two sets of permanent magnets are indicated by the arrows in FIG. 5. The rotor lamination 204 and the two sets of permanent magnets are fixed by two side end plates, and the two side end plates are fixed by four rivets, as shown in FIG. 6. The rivets pass through the mounting holes of the rotor core, as shown in FIG. 4.

The rotor lamination 204 is shown in FIG. 7 and FIG. 8, wherein, the diameter of the arc segment 1 of the rotor is D3=D2-2×lg, with the center at O1; lg is the length of the air gap between the stator and rotor of the motor 200, which is determined according to compressor displacement and machining process precision. The arc radius of the outer cut edge of the rotor satisfies 0.2×D3 ≤ R1 ≤ 0.3×D3, with the center at O2, which is non-concentric with the arc of diameter D3. The width of the permanent magnet is W6=D3/3, 1.01×D4≤H4≤1.2×D4, 0.2×(D3-2×H4)≤H3≤ 0.25×(D3-2×H4). The width of the permanent magnet is W3=2×W5, 1.3×W4≤W3≤1.35×W4, 0°≤ θ3 ≤ 90°, 0.8×W5 ≤ H2 ≤ 0.95×W5.

Wherein, D3 is the third radial dimension, D4 is the fourth radial dimension, and R1 is the radius of the arc-shaped cut edge. H4 is the shortest distance from the first mounting slot 2062 to the axis, H3 is the radial dimension of the first mounting slot, W4 is a gap at the radial outer side of the second mounting slot 2064, W5 is a gap at the radial inner side of the second mounting slot 2064, H2 is the radial dimension of an outer rectangular portion in the second mounting slot, and θ3 is the angle between the leg and the lower base of an inner trapezoidal portion in the second mounting slot.

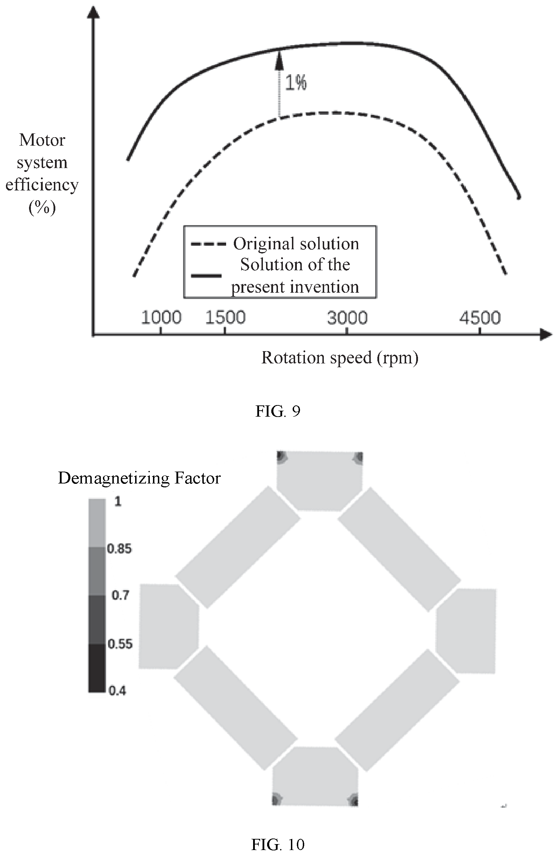

Within the entire variable frequency operating speed range, the efficiency of the system of the motor defined in the present application is improved by more than 1% compared with the original scheme, as shown in FIG. 9.On the other hand, when the motor 200 is in a working condition of two-phase short circuit, and the short-circuit current is 20 times that of a rated working condition, the region of the permanent magnets where irreversible demagnetization occurs accounts for less than 4%, as shown in FIG. 10.

The stator structure, the motor and the compressor provided in the present application can improve the efficiency, improve the stability, and can further improve the output performance of the motor.

The terms "first", "second", and "third" in the present application are used for descriptive purposes only and shall not be construed as indicating or implying relative importance. The term "a plurality of" means two or more, unless expressly specified otherwise. Terms such as "mounted", "connected with", "connected to", and "fixed" shall be understood broadly. For example, "connected to" may be a fixed connection, a detachable connection, or an integral connection; "connected with" may be direct connection or indirect connection via an intermediate medium. For those of ordinary skill in the art, the specific meanings of the above terms in the present application can be understood based on specific situations.

In the description of the present application, the orientation or position relationships indicated by terms such as "upper", "lower", "left", "right", "front", "rear", etc. are based on the orientation or position relationships shown in the accompanying drawings, and are only for the convenience of describing the present application and simplifying the description, and they do not indicate or imply that an indicated device or element must have a specific orientation or must be constructed and operated in a specific orientation, and therefore should not be construed as limitations to the present application.

In the description of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the description, the illustrative expression of the above terms may not indicate the same embodiment or example. In addition, the described specific features, structures, materials or characteristics may be combined with each other in an appropriate method in one or more of any embodiments or examples.

The above-mentioned are merely some embodiments of the present application and are not intended to limit the present application, and for one skilled in the art, various modifications and changes may be made to the present application. Any modifications, equivalent substitutions, improvements and so on should be covered within the scope of protection of the present application.

## Claims

1. A rotor structure, comprising:
a plurality of rotor laminations stacked one over another, wherein each of the rotor laminations is provided with a shaft hole, and first mounting slots and second mounting slots uniformly arranged circumferentially around an axis of the shaft hole, wherein the first mounting slots are of a shape different from that of the second mounting slots, and are located at circumferential positions different from those of the second mounting slots;
first magnets respectively disposed in the first mounting slots; and
second magnets respectively disposed in the second mounting slots,
wherein a diameter of the shaft hole is a fourth radial dimension, and a shortest distance between each of the first mounting slots and the axis is a fourth dimension, wherein a ratio of the fourth dimension to the fourth radial dimension is greater than 1 and less than 1.2.

2. The rotor structure according to claim 1, wherein the ratio of the fourth dimension to the fourth radial dimension ranges from 1.01 to 1.2.

3. The rotor structure according to claim 1 or 2, wherein each of the second magnets has a shape formed by a rectangle and a trapezoid connected radially to each other, wherein a longer side of the rectangle is connected to a lower base of the trapezoid, and the longer side of the rectangle has a dimension twice that of an upper base of the trapezoid.

4. The rotor structure according to claim 3, wherein an included angle between an oblique side of the trapezoid and the upper base of the trapezoid ranges from 0° to 90°.

5. The rotor structure according to claim 3 or 4, wherein a ratio of a dimension of a shorter side of the rectangle to the dimension of the upper base of the trapezoid ranges from 0.8 to 0.95.

6. The rotor structure according to any one of claims 3 to 5, wherein a ratio of the dimension of the longer side of the rectangle to a dimension of an opening in an end of the second mounting slot away from the axis ranges from 1.3 to 1.35.

7. The rotor structure according to any one of claims 1 to 6, further comprising:
mounting holes disposed in the rotor laminations; and
end plates disposed at two axial ends of the plurality of rotor laminations, each end plate being connected to the rotor laminations through the mounting holes.

8. A motor, comprising:
the rotor structure according to any one of claims 1 to 7; and
a stator structure disposed coaxially with the rotor structure.

9. The motor according to claim 8, wherein:
a radial dimension of an air gap between the rotor structure and the stator structure is a first air gap dimension;
a diameter of a third virtual circle corresponding to an outer edge of the rotor laminations is a third radial dimension;
a winding slot is formed between any two adjacent stator teeth in the stator structure, wherein ends of the winding slots away from a stator yoke form a second virtual circle with a diameter that is a second radial dimension,
wherein a difference between the second radial dimension and the third radial dimension is twice the first air gap dimension.

10. The motor according to claim 9, further comprising an arc-shaped cut edge provided on the outer edge of the rotor laminations, wherein a center of the arc-shaped cut edge does not coincide with the axis, and a ratio of a radius of the arc-shaped cut edge to the third radial dimension ranges from 0.15 to 0.35.

11. The motor according to claim 9 or 10, wherein a ratio of a width of the first mounting slot to a difference between the third radial dimension and twice the fourth dimension ranges from 0.15 to 0.3.

12. A compressor, comprising:
the rotor structure according to any one of claims 1 to 7; or
the motor according to any one of claims 8 to 11.
